# EUROPEAN PATENT APPLICATION

(11) **EP 2 988 459 A1**
(43) Date of publication of application: **24.02.2016**
(21) Application number: 14785799.9
(22) Date of filing: 15.04.2014
(51) Int. Cl.: H04L 12/761

(54) **FORWARDING PROCESSING METHOD AND DEVICE FOR MESSAGE**

(30) Priority: 19.04.2013 CN 201310139007
(71) Applicant: ZTE Corporation, Guangdong Province 518057 (CN)
(72) Inventor: CHEN, Peng, Shenzhen Guangdong Province 518057 (CN)
(74) Representative: Novagraaf Technologies
(86) International application number: PCT/CN2014/075410
(87) International publication number: WO 2014/169812

(57) **Abstract**

The present invention provides a method and a device for forwarding a message. The method is applied to a layer-2 network device and comprises: a message from a source end is received, the type of the message is judged, and when the type is judged to be a specified type, the message is forwarded according to the processing flow corresponding to the specified type. Through the technical solution provided by the present invention, the technical problems that addresses may conflict, an IGMPv3 multicast source address cannot be distinguished and the like when a multicast IP address needs to be converted into an MAC address in the process of forwarding a message in the related art are solved, and the usability and security of the multicast function are improved.

## Description

### Technical Field

The present invention relates to the field of communications, and in particular to a method and a device for forwarding a message.

### Background

As an important bearing way of an Internet Protocol TV (IPTV) service, the multicast technology is widely applied. At present, the IPv4 multicast is generally allocated and controlled in a layer-2 network device, such as a switcher and a passive optical network device, according to the Internet Group Management Protocol (IGMP); and the layer-2 device usually forwards a message according to a Media Access Control (MAC) address or a Virtual Local Area Network (VLAN), so that it is necessary to forward the multicast IP group address into a layer-2 MAC address in order to learn and forward the address. Whereas, the multicast IP group address is 224.X.X.X and 225.X.X.X and the multicast MAC address is 01:00:5e:x:x:x, and the MAC address is 1bit less than the IP address, so that a same address may conflict during the conversion. For example, both the IP group addresses 224.0.0.1 and 225.0.0.1 may be converted into the multicast MAC address 01:00:5e:00:00:01. Thus, data may be forwarded wrongly when the two addresses coexist in use.

In addition, a mode for filtering a multicast source address is added in the IGMPv3 protocol so that the multicast information from a specific multicast source can be received or refused definitely as required when a host joins a multicast group. At present, the layer-2 network device generally forwards the message according to the MAC address or the VLAN, namely, it forwards the message based on the destination multicast MAC address and the VLAN. That is, only the forwarding based on the destination multicast IP address is supported, a source IP address cannot be distinguished, and the IGMPv3 function cannot be implemented.

To solve the problem in the related art, there is still no effective solution yet.

### Summary

To solve the technical problems that addresses may conflict, an IGMPv3 multicast source address cannot be distinguished and the like when a multicast IP address needs to be converted into an MAC address in the process of forwarding a message in the related art, the present invention provides a method and a device for forwarding a message.

According to an embodiment of the present invention, a method for forwarding a message is provided, which is applied to a layer-2 network device and includes: a message is received from a source end; the type of the message is judged; and when it is determined that the type is a specified type, the message is forwarded according to the processing flow corresponding to the specified type.

Preferably, the step that the type of the message is judged includes: whether the message is of one of the following specified types is judged: multicast data message, multicast protocol message and non-multicast message.

Preferably, the step that the message is forwarded according to the processing flow corresponding to the specified type includes: when the specified type is the multicast data message, the indicating information of the multicast data message is acquired, wherein the indicating information corresponds to the destination forwarding port of the multicast data message; the destination forwarding port is acquired according to the indicating information; and the multicast data message is forwarded to the destination forwarding port.

Preferably, the indicating information includes the following information in the multicast data message: source IP address, destination IP address and VLAN field value.

Preferably, before the destination forwarding port is acquired according to the indicating information, the method includes: the multicast data message is discarded or flooded when the destination forwarding port indicated by the indicating information is not acquired.

Preferably, the step that the message is forwarded according to the processing flow corresponding to the specified type includes: when the specified type is the multicast protocol message, the multicast protocol message is further classified; and the multicast protocol message is forwarded correspondingly according to its type.

Preferably, the step that the multicast protocol message is forwarded according to the processing flow corresponding to the specified type includes: when the specified type is the non-multicast message, the non-multicast data message is forwarded by using the MAC address in the non-multicast data message.

According to another embodiment of the present invention, a device for forwarding a message is provided, which is applied to a layer-2 network device and includes: a receiving component, which is configured to receive a message from a source end, a judgment component, which is configured to judge the type of the message, and a forwarding component, which is configured to forward the message according to the processing flow corresponding to the specified type when it is determined that the type is a specified type.

Preferably, the judgment component is configured to judge whether the message is of one of the following specified types: multicast data message, multicast protocol message and non-multicast message.

Preferably, the forwarding component includes a first acquisition element, which is configured to acquire the indicating information of the multicast data message when the specified type is the multicast data message, wherein the indicating information corresponds to the destination forwarding port of the multicast data message; a second acquisition element, which is configured to acquire the destination forwarding port according to the indicating information; and a first forwarding element, which is configured to forward the multicast data message to the destination forwarding port.

Preferably, the forwarding component includes: a classifying element, which is configured to further classify the multicast protocol message when the specified type is the multicast protocol message; and a second forwarding element, which is configured to forward the multicast protocol message correspondingly according to its type.

Preferably, the forwarding component includes: a third forwarding element, which is configured to, when the specified type is the non-multicast message, forward the non-multicast data message by using the MAC address in the non-multicast data message.

In the embodiments, through the technical means that the message is forwarded according to the type of the received message and the processing flow corresponding to the specified type, the technical problems that addresses may conflict, an IGMPv3 multicast source address cannot be distinguished and the like when a multicast IP address needs to be converted into an MAC address in the process of forwarding a message in the related arts are solved, accordingly, the usability and security of the multicast function are improved.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a flowchart of a method for forwarding a message according to an embodiment of the present invention;
Fig. 2 is a block diagram showing the structure of a device for forwarding a message according to an embodiment of the present invention;
Fig. 3 is another block diagram showing the structure of a device for forwarding a message according to an embodiment of the present invention;
Fig. 4 is a diagram showing the implementation principle of a device for forwarding a message according to an embodiment of the present invention; and
Fig. 5 is a flowchart of a method for forwarding a message based on the device shown in Fig. 4.

### Detailed Description of the Embodiments

The present invention will be described below in combination with the drawings and embodiments in detail. It should be noted that, in case of no conflict, the embodiments of the application and features therein can be combined with one another.

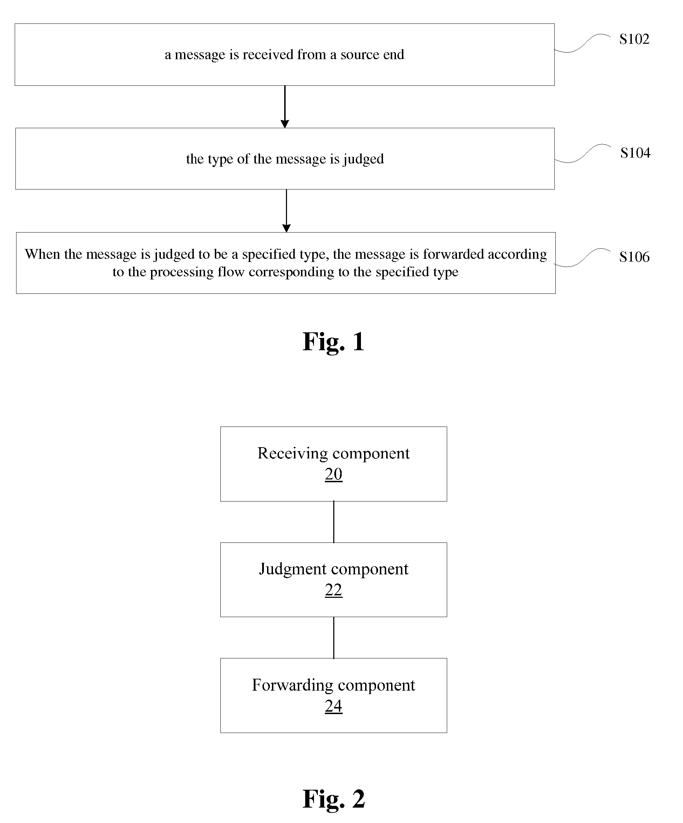

The forwarding method in the embodiment is applied to a layer-2 network device. Fig. 1 is a flowchart of a method for forwarding a message according to an embodiment of the present invention. As shown in Fig. 1, the method includes:
Step 102: A message is received from a source end.
Step 104: A type of the message is judged.
Step 106: When it is determined that the above type is a specified type, the message is forwarded according to the processing flow corresponding to the specified type. It should be noted that the processing flow and the specified type can be preset here. For example, they are configured by an upper layer.

In these steps, the message is forwarded according to the processing flow corresponding to the type of the message and it is unnecessary to convert an IP address into an MAC address, so that the problems that addresses may conflict, a source IP address cannot be distinguished and the like when an IP address needs to be converted into an MAC address in the related art are solved basically, further the problem that a source address of the IGMPv3 broadcast cannot be filtered during the forwarding of the MAC address, thus improving the usability and security of the multicast function.

The message can be of various types. Thus, Step 104 can be implanted in the following forms: whether the above message is of a specified type is judged, wherein the specified type includes but is not limited to one of the following types: multicast data message, multicast protocol message and non-multicast message.

The processes for forwarding the multicast data message, the multicast protocol message and the non-multicast message are described below respectively.
(1) when the specified type is the multicast data message, the indicating information of the multicast data message is acquired, wherein the indicating information corresponds to the destination forwarding port of the multicast data message; the destination forwarding port is acquired according to the indicating information; and the multicast data message is forwarded to the destination forwarding port. The processing process can be as follows:
   A destination port number to which the multicast data message needs to be forwarded (i.e., the identifier of the destination forwarding port) is found according to the IP address of the multicast data message; the VLAN, Priority(PRI) and other content of the message are modified according to a preset configuration rule; and the message is forwarded to the destination port (i.e., the destination forwarding port).

   It should be noted that the multicast data message is discarded or flooded when the destination forwarding port indicated by the indicating information is not acquired before the destination address of the multicast message is acquired according to the IP address in the processing process.
(2) When the specified type is the multicast protocol message, the multicast protocol message is further classified; and the multicast protocol message is forwarded correspondingly according to its type.
   If it is a multicast join message, an IP address table entry is added; if it is a multicast leave message, the IP address table entry is deleted; and if it is other multicast messages, corresponding processing is carried out according to the configuration. Finally, whether the processed message is forwarded or discarded and whether the VLAN, priority and other content of the message are modified are determined according to the configuration.
(3) When the specified type is the non-multicast message, the non-multicast data message is forwarded according to the MAC address in the non-multicast data message. In the processing process, the message is forwarded in a manner which is employed usually by a conventional layer-2 network device to forward a message, and the manner is a technical solution in the related art, thereby needing no further description.
   In an embodiment, a device for forwarding a message is further provided, which is applied to a layer-2 network device and is configured to implement the embodiments and the preferred embodiments. The device has been described above, thereby needing no further description here, and only the components involved in the device are described below. As below, the term "component" can implement the combination of software and/or hardware of predetermined functions. Although the device described in the following embodiments is preferably implemented by software, the implementation of hardware or the combination of the software and hardware can also be composed. Fig. 2 is a block diagram showing the structure of a device for forwarding a message according to an embodiment of the present invention. As shown in Fig. 2, the device includes:
   a receiving component 20 connected to a judgment component 22 and configured to receive a message from a source end;
   the judgment component 22 connected to a forwarding component 24 and configured to judge the type of the message; and
   the forwarding component 24 configured to, when the judgement component 22 judges that the type is a specified type, forward the message according to the processing flow corresponding to the specified type.

Through the functions implemented by respective components above, the problems that addresses may conflict, a source IP address cannot be distinguished and the like when an IP address needs to be converted into an MAC address in the related art can be also solved basically, and the problem that the source address of IGMPv3 broadcast cannot be filtered during the forwarding of the MAC address is solved, thus improving the usability and security of the multicast function.

In the embodiment, the judgment component 22 is configured to judge whether the multicast message is of one of the following specified types: multicast data message, multicast protocol message, and non-multicast message.

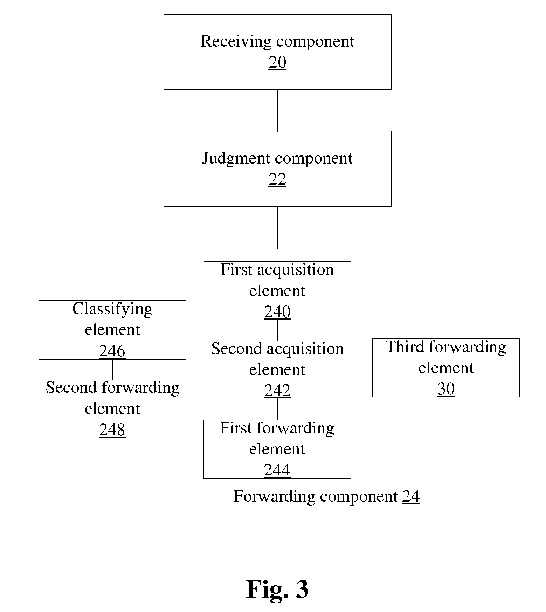

In a preferred embodiment in the embodiment, as shown in Fig. 3, the forwarding component 24 can include but is not limited to: a first acquisition element 240 which is connected to a second acquisition element 242 and is configured to acquire the indicating information of the multicast data message when the specified type is the multicast data message, wherein the indicating information corresponds to a destination forwarding port of the multicast data message; the second acquisition element 242, which is connected to a first forwarding element 244 and is configured to acquire a destination forwarding port according to the indicating information; and the first forwarding element 244, which is configured to forward the multicast data message to the destination forwarding port.

In another preferred embodiment in the embodiment, as shown in Fig. 3, the forwarding component 24 includes: a classifying element 246, which is connected to a second forwarding element 248 and is configured to, when the specified type is the multicast protocol message, further classify the multicast protocol message; and the second forwarding element 248 which is configured to forward the multicast protocol message correspondingly according to its type.

In another preferred embodiment in the embodiment, the forwarding component 24 includes but is not limited to the following element: a third forwarding element 30, which is configured to, when the specified type is the non-multicast message, forward the non-multicast data message by using the MAC address in the non-multicast data message.

As described above, the components involved in the embodiment can be implemented by software or corresponding hardware. For example, the components can be in a processor. For example, the components can be in a processor which includes the receiving component 20, the judgment component 22 and the forwarding component 24; or, the components can be in a corresponding processor respectively: the receiving component 20 is in a first processor, the judgment component 22 is in a second processor, and the forwarding component 24 is in a third processor; or, two of the three components are in a processor, and the other one is in another processor.

To be understood better, the embodiment is described below in combination with the preferred embodiment of the embodiment.

### Embodiment 1

An embodiment provides a solution for forwarding IPv4 multicast based on the learning and forwarding of an IP address, in order to solve the problem of address conflict when a multicast IP address is converted into an MAC address and implement the function of filtering a source address of an IGMPv3 multicast.

To achieve the objective, the following technical solution is adopted here.

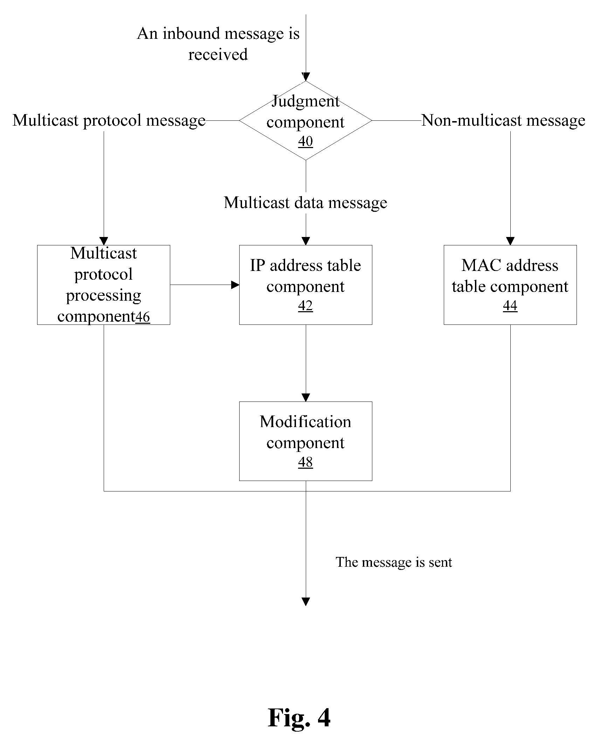

As shown in Fig. 4, a device for forwarding a message provided here includes but is not limited to the following components: a judgment component 40, an IP address table component 42, an MAC address table component 44, a multicast protocol processing component 46, and a modification component 48, wherein the solid line is the trend of the message, and the dash line is the trend of internal configuration of the device.

The judgement component 40 is configured to judge the type of the message and select a corresponding message processing flow.

The judgment component 40 judges the message (it can judge the parsed message content according to the received message), if the message is a multicast protocol message, the message is sent to the multicast protocol processing component 46 to be forwarded; if the message is a multicast data message, the message is sent to the IP address table component 42 to be forwarded; and if the message is not a multicast message, namely, it is a non-multicast message, the message is sent to the MAC address table component 44 to be subjected to layer-2 forwarding processing.

The IP address table component 42 is configured to learn an IP address and forward the multicast data message according to the IP address. Namely, after receiving the multicast data message, the IP address table component 42 finds a destination port number to which the multicast data message needs to be forwarded according to the IP address and then sends the destination port number to the modification component 48.

The address entry of the IP address table component 42 is configured by the multicast protocol processing component 46. The IP address table component 42 can only receive the multicast data message from the judgment component 40. After the message is received, the VLAN, the Destination IP address (DIP) and the Source IP address (SIP) of the message are extracted, the entry in the address table is found; if there is a matched entry, the destination port number in the entry is acquired and is sent to the modification component 48; and if there is no matched entry, the message is discarded or flooded according to configuration.

The MAC address table component 44 is configured to learn the address of the non-multicast message and forward the message. The MAC address table component 44 is a forwarding component of a common layer-2 network device and can adopt a conventional layer-2 forwarding way in the related art, thereby needing no further description.

The multicast protocol processing component 46 is configured to configure and manage an IP address table according to the specific content of a multicast protocol packet and modify the VLAN, PRI and other content of the multicast protocol message.

The multicast protocol processing component 46 can only receive the multicast protocol message from the judgment component 40. After the message is received, the message is further parsed to judge the type of the message and acquire the related information. If the multicast protocol message accords with the multicast mode configured by the upper layer, the IP address table component 42 carries out corresponding configuration, such as addition and deletion. Then, whether to continuously forward or discard the multicast protocol message is determined according to the configuration of the upper layer; if it is determined that the message is forwarded, the message is forwarded after being modified or is directly forwarded without being modified according to the configuration of the upper layer.

When the multicast protocol processing component 46 further judges the received multicast protocol message, if the message is a multicast join message, an IP address table entry is added; if the message is a multicast leave message, the IP address table entry is deleted; and if the message is other multicast messages, corresponding processing is carried out according to the configuration. Whether to forward or discard the processed message and whether to modify the VLAN, PRI and other content of the message are determined according to the configuration. The IP address table entry includes but is not limited to the following information:
DIP: the destination IP of the entry;
SIP: the source IP of the entry;
VLAN: the VLAN of the entry;
mode: the IGMPv3 mode of the entry, including an include mode and an exclude mode;
state: the state of the entry, including whether the entry is effective or aging and the like; and
portlist: an effective destination port number of the entry.

It should be noted that, the way for processing other multicast protocol messages and the rule for modifying the message are configured by the upper layer, and the configuration is configured by the user.

The modification component 48 is configured to modify the VLAN, PRI and other content of the multicast data message. The modification component 48 only receives the multicast data message from the IP address table component 42, and modifies the message according to the configuration of the upper layer, and then forwards the message according to the destination port number obtained in the IP address table component 42.

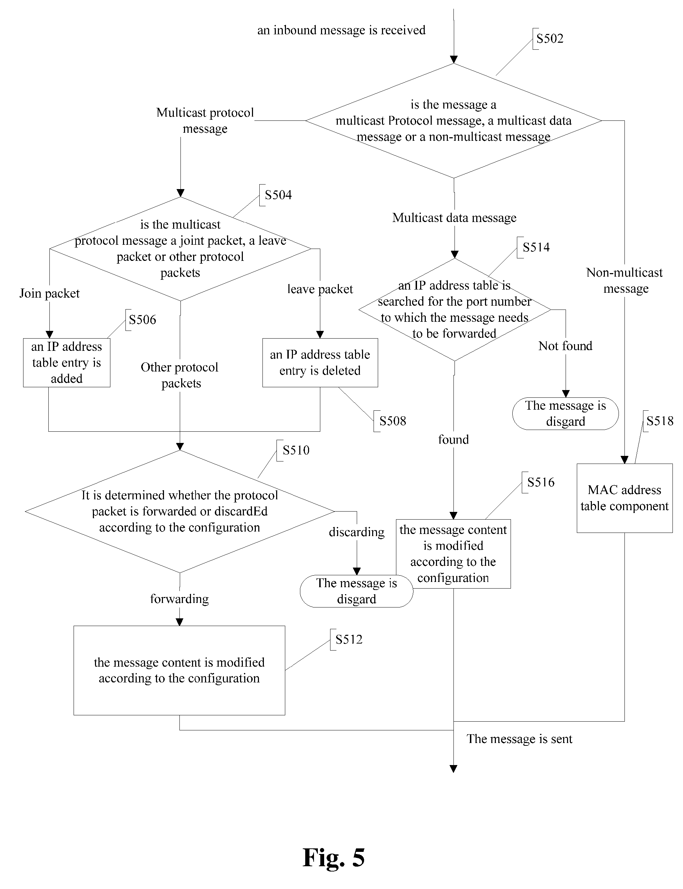

Fig. 5 is a flowchart of a method for forwarding a message based on the device shown in Fig. 4. As shown in Fig. 5, the method includes:
Step 502: After receiving an inbound message, the device sends it to a judgment component 40, the judgment component 40 judges the MAC address in the message and whether an IGMP head is contained, and records which port of the device the message is from.

If the MAC is multicast MAC and contains the IGMP head, it is determined that the message is the multicast protocol message and the message is sent to the multicast protocol processing component 46 to be processed, then Step 504 is executed.

If the MAC is multicast MAC and does not contain the IGMP head, it is determined that the message is the multicast data message and the message is sent to the IP address table component 42 to be processed, then Step 514 is executed.

If the MAC is not multicast MAC, it is determined that the MAC is non-IPv4 multicast MAC and the MAC is sent to the MAC address table component 44 to be processed, and then Step 518 is executed.

Step 504: After receiving the multicast protocol message from the judgment component 40, the multicast protocol processing component 46 parses the message type field in the IGMP head of the message.

Step 504: If the message is a multicast join packet, Step 506 is executed.

Step 504: If the message is a multicast leave packet, Step 508 is executed.

Step 504: If the message is a multicast query packet or other protocol packets, Step 510 is executed.

Step 506: If the related information of the message, and the source port number and the like recorded in Step 502 accord with the multicast mode configured by the upper layer, an address entry is added to the IP address table component 42, and then Step 510 is executed.

Step 506: The address entry includes but is not limited to six parameters: DIP, SIP, VLAN, mode, state and portlist, where the DIP and SIP are from a corresponding field in the message, and the VLAN, mode and state are from the multicast mode and parameters configured by the upper layer, and portlist is from a source port number recorded in Step 502.

Step 508: If the related information of the message, and the source port number and the like recorded in Step 502 accord with the multicast mode configured by the upper layer, a deletion address entry is configured to the IP address table component 42, and then Step 510 is executed.

Step 508: The address entry includes but is not limited to six parameters: DIP, SIP, VLAN, mode, state and portlist, wherein the DIP and SIP are from a corresponding field in the message, and the VLAN, mode and state are from the multicast mode and parameters configured by the upper layer, and portlist is from a source port number recorded in Step 502.

Step 510: Whether to continuously forward or discard the multicast protocol message is judged according to the multicast mode and parameters configured by the upper layer; if the multicast protocol message is forwarded, Step 512 is executed; and if the multicast protocol message is discarded, the message is discarded and the flow is ended.

Step 512: The VLAN, PRI and other fields of the message needing modifying are modified according to the configuration of the upper layer and then are forwarded; and the message not needing modifying is forwarded directly. Then, the flow is ended.

Step 514: After receiving the multicast data message from the judgment component 40, the IP address table component 42 parses the message to acquire the VLAN, DIP, SIP and other fields in the message, and then finds the entry in the address table.

Step 514: If a matched entry is found by finding the address table, the parameter portlist is acquired from the entry, and then the message is sent to the modification component 48, and then Step 516 is executed.

Step 514: If no matched entry is found by finding the address table, it is determined that the message is an unknown multicast message and the unknown multicast message is flooded; whereas, the flooding flow is not within the scope of the patent, the unknown multicast message can be regarded to be discarded simply, and the flow is ended.

Step 516: The modification component 48 receives a known multicast data message from the IP address table component 42, modifies the VLAN, PRI and other fields of the message needing modifying according to the configuration of the upper layer, and then forwards the message to the destination port found in Step 514; and the message not needing modifying is directly forwarded to the destination port found in Step 514. Then, the flow is ended.

Step 518: After receiving the non-multicast message from the judgment component 40, the MAC address table component 44 carries out conventional layer-2 forwarding, and the logic of the conventional layer-2 forwarding is not within the scope of the patent, thereby skipping.

It should be noted that the configuration of the upper layer involved above is the service configuration of a user layer.

In consideration with a user side multicast source and other special applications, the multicast protocol message and the data message should not be distinguished in term of uplink and downlink, so that the uplink and the downlink of the device are symmetrical. Of source, the solution of the embodiment can be used separately only in the uplink direction or the downlink direction in the actual application.

The embodiment has the following beneficial effects: a method for forwarding a multicast message according to an IP address is used, and the conversion from the IP address to the MAC address is avoided, so that the problem of address conflict during the conversion is solved, accordingly, the problem that the source address of the IGMPV3 multicast cannot be filtered during the forwarding of the MAC address is solved, and the usability and security of the multicast function are improved.

In another embodiment, software is further provided, which is configured to execute the technical solutions described in the embodiments and preferred embodiments above.

In another embodiment, a storage medium is further provided, in which the software is stored. The storage medium includes but is not limited to a compact disk, a floppy disk, a hard disk, an erasable memory and the like.

Obviously, those skilled in the art shall understand that the components or steps of the present invention may be implemented by general computing device and centralized in a single computing device or allocated in a network consisting of multiple computing device. Optionally, the components or steps may be implemented by program codes executable by the computing device, so that they may be stored in a storage device and executed by the computing device, and, in some cases, the steps can be executed in a sequence different from the illustrated or described sequence, or they are respectively made into the integrated circuit components or many of them are made into a single integrated circuit component. By doing so, the present invention is not limited to any specific combination of hardware and software.

The above are only preferred embodiments of the present invention and not intended to limit the present invention. For those skilled in the art, various modifications and changes can be made in the present invention. Any modifications, equivalent replacements, improvements and the like within the spirit and principle of the present invention shall fall within the scope of protection of the present invention.

### Industrial Applicability

The technical solution provided by the present invention can be applied to the forwarding process of the message, and through the technical solution that the message is forwarded according to the processing flow corresponding to the specified type, the technical problems that addresses may conflict, an IGMPv3 multicast source address cannot be distinguished and the like when a multicast IP address needs to be converted into an MAC address in the process of forwarding a message in the related art are solved, accordingly, the usability and security of the multicast function are improved.

## Claims

1. A method for forwarding a message, **characterized in that** the method is applied to a layer-2 network device and comprises:
receiving a message from a source end;
judging a type of the message; and
when the type is judged to be a specified type, forwarding the message according to a processing flow corresponding to the specified type.

2. The method according to claim 1, **characterized in that** judging the type of the message comprises:
judging whether the message is of one of the following specified types: multicast data message, multicast protocol message and non-multicast message.

3. The method according to claim 2, **characterized in that** forwarding the message according to the processing flow corresponding to the specified type comprises:
when the specified type is the multicast data message, acquiring indicating information of the multicast data message, wherein the indicating information corresponds to a destination forwarding port of the multicast data message;
acquiring the destination forwarding port according to the indicating information; and
forwarding the multicast data message to the destination forwarding port.

4. The method according to claim 2, **characterized in that** the indicating information comprises the following information in the multicast data message: source Internet Protocol (IP) address, destination IP address and Virtual Local Area Network (VLAN) field value.

5. The method according to claim 3, **characterized in that** before the destination forwarding port is acquired according to the indicating information, the method comprises:
discarding or flooding the multicast data message when the destination forwarding port indicated by the indicating information is not acquired.

6. The method according to claim 2, **characterized in that** forwarding the message according to the processing flow corresponding to the specified type comprises:
when the specified type is the multicast protocol message, classifying the multicast protocol message; and
forwarding the multicast protocol message according to the type to which the multicast protocol message belongs.

7. The method according to claim 2, **characterized in that** forwarding the the multicast protocol message according to the processing flow corresponding to the specified type comprises:
when the specified type is the non-multicast message, forwarding the non-multicast data message by using a Media Access Control (MAC) address in the non-multicast data message.

8. A device for forwarding a message, **characterized in that** the device is applied to a layer-2 network device and comprises:
a receiving component configured to receive a message from a source end;
a judgment component configured to judge the type of the message; and
a forwarding component configured to forward the message according to a processing flow corresponding to a specified type when the judgment component determines that the type is the specified type.

9. The device according to claim 8, **characterized in that** the judgment component is configured to judge whether the message is of one of the following specified types:
multicast data message, multicast protocol message and non-multicast message.

10. The device according to claim 9, **characterized in that** the forwarding component comprises:
a first acquisition element configured to acquire the indicating information of the multicast data message when the specified type is the multicast data message, wherein the indicating information corresponds to a destination forwarding port of the multicast data message;
a second acquisition element configured to acquire the destination forwarding port according to the indicating information; and
a first forwarding element configured to forward the multicast data message to the destination forwarding port.

11. The device according to claim 9, **characterized in that** the forwarding component comprises:
a classifying element configured to classify the multicast protocol message when the specified type is the multicast protocol message; and
a second forwarding element configured to forward the multicast protocol message according to a type to which the multicast protocol message belongs.

12. The device according to claim 9, **characterized in that** the forwarding component comprises:
a third forwarding element configured to, when the specified type is the non-multicast message, forward the non-multicast data message by using an MAC address in the non-multicast data message.
